# EUROPÄISCHE PATENTSCHRIFT

(11) **EP 2 194 232 B1**
(45) Veröffentlichungstag und Bekanntmachung des Hinweises auf die Patenterteilung: **25.03.2015**
(21) Anmeldenummer: 09011391.1
(22) Anmeldetag: 04.09.2009
(51) Int. Cl.: F04D 29/68, F04D 29/54, F01D 5/14

(54) **Strömungsmaschine mit Seitenwand-Grenzschicht-Barriere**
Turbo engine with side wall boundary layer barrier
Turbomachine dotée d'une barrière à couche frontière sur la paroi latérale

(30) Priorität: 04.12.2008 DE 102008060424
(43) Veröffentlichungstag der Anmeldung: 09.06.2010
(73) Patentinhaber: Rolls-Royce Deutschland Ltd & Co KG, 15827 Blankenfelde-Mahlow (DE)
(72) Erfinder: Gümmer, Volker, Dr., 15831 Mahlow (DE)
(74) Vertreter: Weber, Joachim

(56) Entgegenhaltungen:
- EP-A1- 0 978 632
- EP-A1- 1 916 385
- EP-A1- 1 927 723
- EP-A2- 1 536 147
- DE-A1-102006 048 933
- GB-A- 2 417 053

## Beschreibung

Die aerodynamische Belastbarkeit und die Effizienz von Strömungsmaschinen, beispielsweise Bläsern, Verdichtern, Pumpen, Ventilatoren und Turbinen, wird durch das Wachstum und die Ablösung von Grenzschichten auf den Schaufeln und insbesondere auf den Naben- und Gehäusewänden begrenzt.

Der Stand der Technik hält für den Fall hoher aerodynamischer Belastung bzw. Strömungsumlenkung und starken Grenzschichtwachstums auf den Ringkanalseitenwänden (Naben- oder Gehäusekontur) nur bedingt Lösungen bereit.

Das zum Stand der Technik gehörende Konzept der nichtachsensymmetrischen Wandkonturierung, bietet aufgrund der milden Eingriffe in die Seitenwandkontur wenig Abhilfe. So beschreibt die US 6,283,713 B1 eine an Saug und Druckseite der Schaufel unterschiedlich aber dennoch sehr glatt gestaltete Seitenwandkontur.

Die US 6,561,761 B1 beschreibt eine mittig in der Passage durchhängende Seitenwandkontur, deren Umfangsungleichförmigkeit bereits weit vor der Schaufelreihe beginnt und durch eine Konturerhöhung entlang beider Schaufelseiten, Saug- und Druckseite, gekennzeichnet ist.
Die US 6,669,445 B2 beschreibt eine Konturierung der Seitenwand, die durch sanfte Übergänge und Höhenänderungen gekennzeichnet ist.

Die US 7,220,100 B2 offenbart Regionen einer Konturerhöhung entlang der Druckseite von Turbinenschaufeln.

Die US 7,354,243 B2 schließlich offenbart eine komplexe durch Sinusverläufe charakterisierte Seitenwandkontur mit kleine Amplituden und folglich sanften Konturänderungen in Strömungsrichtung.

All diesen Konzepten ist gemeinsam, dass sie eine milde Veränderung des Druckfeldes auf der Seitenwandkontur in der Schaufelpassage erreichen wollen, nicht aber den Charakter eines Hindernisses zur intensiven Umverteilung der Strömung besitzen.

Im Stand der Technik fehlt es an effektiven Maßnahmen, die die starke Sekundärströmung im Bereich fester, insbesondere mit Deckband versehener Schaufelreihen von Strömungsmaschinen deutlich verringern.

Eine bekannte, aktive Methode ist die des Injizierens eines energiereichen Fluidstrahls in Richtung der Hauptströmung durch die betroffene Schaufelreihe. Grundsatz dieses Konzeptes ist das Einbringen zusätzlich aufzubringender Energie an bevorzugten Stellen des Strömungsfeldes, wobei der Energiebetrag nennenswert ist und den erzielten Nettogewinn beim Wirkungsgrad deutlich schmälert.

Der allgemeine Gedanke der Grenzschichtbeeinflussung durch Veränderung der Seitenwand sowie durch Fluidinjektion ist somit im Stand der Technik enthalten, doch sind bekannte Lösungen für die Beeinflussung der Seitenwandgrenzschichtströmung in Schaufelanordnungen mit festem Schaufelende, d.h. bei Verbindungen von Schaufelende und Hauptströmungspfadberandung ohne Spalt, bedingt wirkungsvoll.

Die Strömung in Schaufelreihen aerodynamisch hoch belasteter Strömungsmaschinen ist gekennzeichnet durch eine sehr hohe zu erreichende Strömungsumlenkung. Die erforderliche Strömungsumlenkung kann entweder in Teilen der Schaufelhöhe oder entlang der gesamten Schaufelhöhe so hoch werden, dass eine konventionelle Anordnung zu frühzeitiger Ablösung der Grenzschichtströmung im Randbereich an Naben- und/oder Gehäusewänden führt.

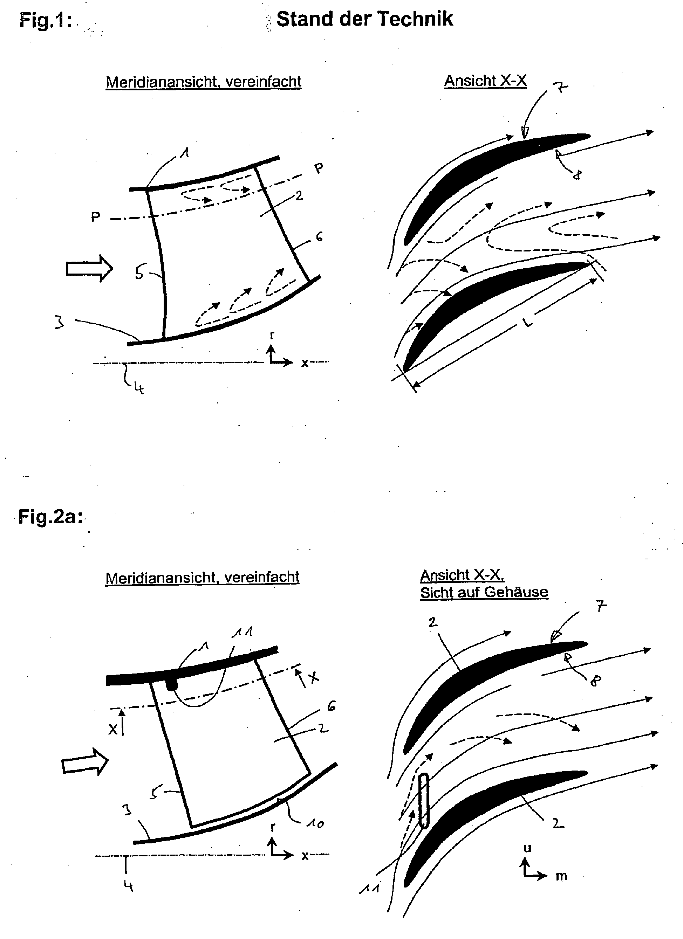

Übliche Schaufelreihen, wie sie in Fig.1 dargestellt sind, ohne zusätzliche Gestaltungsmerkmale zur Stabilisierung der Wandgrenzschichten, sind aufgrund extrem hoher Druckverluste und der Nichterreichung der angestrebten Strömungsumlenkung, beides verursacht durch starke Sekundärströmungen, Grenzschichtablösung und Rückströmung, ungeeignet. Die Konsequenz ist ein insgesamt schlechtes Leistungsverhalten der Strömungsmaschine.

Schaufelreihen mit einer Gestaltung nach dem Stand der Technik, siehe Fig.1, besitzen aufgrund der starken auftretenden aerodynamischen Belastung der Seitenwandgrenzschichten, d. h. der an der Hauptströmungspfadberandung ausgebildeten Grenzschichten, einen zu geringen Arbeitsbereich und zu hohe Verluste, um die in modernen Strömungsmaschinen erforderlichen Betriebskennwerte zu erbringen. Bisher vorgeschlagene Lösungen zur Fluidzufuhr am Strömungspfadrand dienten primär der Beeinflussung der Spaltleckageströmung an Rotorspitzen, und dies unter Aufbringung nennenswerter Zusatzenergiebeträge.

Aus der EP 1 927 723 A1 ist es bekannt, in einer Schaufelpassage Querlamellen anzuordnen, die sich parallel zu der Skelettlinie des benachbarten Schaufelprofils und somit in Richtung der dort herrschenden Strömung erstrecken.

Aus der EP 1 916 385 A1 ist es ebenfalls bekannt, in einem Schaufelzwischenraum eine flügelartige Lamelle anzuordnen, welche sich parallel zu der Skelettlinie der benachbarten Schaufeln und somit in Strömungsrichtung erstreckt.

Eine ähnliche Konstruktion zeigt die GB 2 417 053 A, wobei hierbei vor dem Anströmbereich der Schaufelreihe Ablenkbleche angeordnet sind, welche sich ebenfalls parallel zur Skelettlinie erstrecken.

In der EP 0 978 632 A1 ist eine Strömungsmaschine gezeigt, bei welcher in der Schaufelpassage eine Zwischenschaufel angeordnet ist, deren Verlauf parallel zur Skelettlinie der benachbarten Schaufeln ausgerichtet ist.

Aus der EP 1 536 147 A2 ist es vorbekannt, aus Schlitzen, Löchern oder Flachdüsen Fluidstrahlen auszubringen, welche parallel der Skelettlinien verlaufen.

Die DE 10 2006 048 933 A1 zeigt Mittel zur grenzschichtnahen Strömungsbeeinflussung, welche lamellenartige Vortex-Generatoren oder eine Oberflächenrauigkeit umfassen.

Der Erfindung liegt die Aufgabe zugrunde, eine Strömungsmaschine der eingangs genannten Art zu schaffen, welche unter Vermeidung der Nachteile des Standes der Technik eine erhöhte aerodynamische Belastung und einen verbesserten Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die vorliegende Erfindung bezieht sich somit auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Anzahl von Schaufeln, die mit der rotierenden Welle der Maschine verbunden sind und Energie an das Arbeitsmedium abgeben.

Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind üblicherweise von einem Gehäuse umgeben, in anderen Fällen, z. B. bei Propellern oder Schiffsschrauben, existiert kein Gehäuse.

Die Maschine kann auch einen Stator vor dem ersten Rotor, ein sogenanntes Vorleitrad aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel.

Alternativ kann die besagte Strömungsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinander folgenden Rotoren.

Schließlich kann die Strömungsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen.

Im einzelnen umfasst die vorliegende Erfindung eine Strömungsmaschine mit einem Hauptströmungspfad, in welchem zumindest eine Reihe von Schaufeln angeordnet ist, wobei mindestens ein Schaufelende einer Schaufelreihe eine feste Verbindung zur Hauptströmungspfadberandung aufweist und mindestens eine von der Seitenwand in den Hauptströmungspfad vorstehende Grenzschichtbarriere im Bereich dieses festen Schaufelendes vorgesehen ist, wobei die Grenzschichtbarriere zum Zweck der Ablenkung der wandnahen Grenzschichtströmung von der Profilsaugseite hin zur benachbarten Druckseite stromauf der Schaufelhinterkante angeordnet ist und wenigstens in einem Teil ihres Verlaufes entsprechend schräg zur Hauptströmungsrichtung - gemessen durch den Verlauf der in den betrachteten Punkt verschobenen Skelettlinie des Schaufelprofils an der Seitenwand - verläuft.

Erfindungsgemäß ist für den Einsatz in einer Strömungsmaschine eine besondere Schaufelreihe geschaffen, an der im Bereich mindestens eines ihrer Enden an der Hauptströmungspfadberandung eine speziell geformte Grenzschichtbarriere vorgesehen ist, die das nahe entlang der Seitenwand strömende Grenzschichtfluid in Richtung der Profildruckseite ablenkt.

Im Folgenden wird die Erfindung anhand von Ausführungsbeispielen in Verbindung mit den Figuren beschrieben. Dabei zeigt:
- Fig.1:: eine Schaufel nach dem Stand der Technik,
- Fig.2a:: eine erfindungsgemäße Statorschaufelreihe mit freiem Schaufelende an der Nabe und lastübertragendem festem Schaufelende am Gehäuse, Grenzschichtbarriere am Gehäuse,
- Fig.2b:: eine erfindungsgemäße Statorschaufelreihe mit lastfreiem festem Schaufelende (Deckband) an der Nabe, Grenzschichtbarriere an der Nabe,
- Fig.2c:: eine Ansicht Y-Y aus Fig.2b, Fall einer Turbinenschaufelreihe,
- Fig.2d:: eine erfindungsgemäße Rotorschaufelreihe mit lastübertragendem festem Schaufelende an der Nabe und freiem Schaufelende am Gehäuse, Grenzschichtbarriere an der Nabe,
- Fig.2e:: eine erfindungsgemäße Rotorschaufelreihe mit lastfreiem festem Schaufelende (Deckband) am Gehäuse, Grenzschichtbarriere am Gehäuse,
- Fig.2f:: eine Ansicht X-X aus Fig.2e, Fall einer Turbinenschaufelreihe,
- Fig.3a:: erfindungsgemäße Grenzschichtbarrieren, Ringkanalwand-Draufsichten an einem festen Schaufelende,
- Fig.3b:: weitere erfindungsgemäße Grenzschichtbarrieren, Ringkanalwand-Draufsichten an einem festen Schaufelende,
- Fig.3c:: weitere erfindungsgemäße Grenzschichtbarrieren, Ringkanalwand-Draufsichten an einem festen Schaufelende,
- Fig.3d:: weitere erfindungsgemäße Grenzschichtbarrieren, Ringkanalwand-Draufsichten an einem festen Schaufelende,
- Fig.3e:: weitere erfindungsgemäße Grenzschichtbarrieren, Ringkanalwand-Draufsichten an einem festen Schaufelende,
- Fig.3f:: weitere erfindungsgemäße fluidische Grenzschichtbarriere, Ringkanalwand-Draufsichten an einem festen Schaufelende, gestaffelte Anordnung der Fluidquerstrahlöffnungen
- Fig.4:: erfindungsgemäß vorteilhafte Querschnittsformen der Grenzschichtbarriere, Ebene K (Schnitt K-K aus Fig.3c),
- Fig.5:: erfindungsgemäße Grenzschichtbarrieren, Strukturerhebung, perspektivische Darstellungen,
- Fig.6:: eine erfindungsgemäße Grenzschichtbarriere, Ebene K (Schnitt K-K aus Fig.3c), Definitionen,
- Fig.7a:: eine erfindungsgemäße Grenzschichtbarriere, Fluidquerstrahl, perspektivische Darstellung,
- Fig.7b:: erfindungsgemäße Grenzschichtbarrieren, Fluidquerstrahl, Schnitt S-S aus Fig.3e, und
- Fig.7c:: weitere erfindungsgemäße Grenzschichtbarrieren, Fluidquerstrahl, Schnitt S-S aus Fig.3e.

Eine konventionelle Schaufelreihe 2 nach dem Stand der Technik, wie sie in Fig.1 gezeigt ist, besitzt keine an einer Hauptströmungspfadberandung 9 in Saugseitennähe vorgesehenen Seitenwand-Grenzschichtbarrieren zur Reduzierung der üblichen Sekundärströmung. Die rechte Seite der Fig.1 zeigt vereinfacht eine Rotor- oder Statorschaufelreihe 2 im Meridianschnitt mit Anströmung von links nach rechts (dicker Pfeil). Bei konventionellen Schaufeln 2 verläuft die Strömung zwar um die einzelnen Profilschnitte der Schaufeln 2 (siehe Ansicht X-X) dem Verlauf der Schaufelpassage folgend von der Vorderkante 5 (VK) zur Hinterkante 6 (HK), doch treten in Nähe der Strömungspfadberandung an Nabe 3 oder Gehäuse 1 nachteilige Sekundärströmungen auf, die lokale Rückströmgebiete mit teils abgelöster Strömung zur Folge haben (siehe gestrichelte Pfeile im linken und rechten Teil der Fig.1).

Die Fig.2a zeigt das Beispiel einer erfindungsgemäßen Schaufelreihe 2, hier eines Stators mit festem Schaufelende am Gehäuse 1, an dem die auftretenden mechanischen Lasten auf die bauliche Struktur der Strömungsmaschine weiter übertragen werden und das im folgenden als "lastübertragendes festes Schaufelende" bezeichnet wird. An der Nabe 3 befindet sich ein freies Schaufelende mit Laufspalt 10.

Die Schaufel 2 ist im Meridianschnitt mit Anströmung von links nach rechts, siehe linker Teil, und in der Ansicht X-X (Gehäuseansicht) im rechten Teil der Fig.2a dargestellt.

Der Stator besitzt an seinem lastübertragenden festen Schaufelende mindestens eine Seitenwand-Grenzschichtbarriere 10, die in Fig.2a vereinfacht skizziert ist.

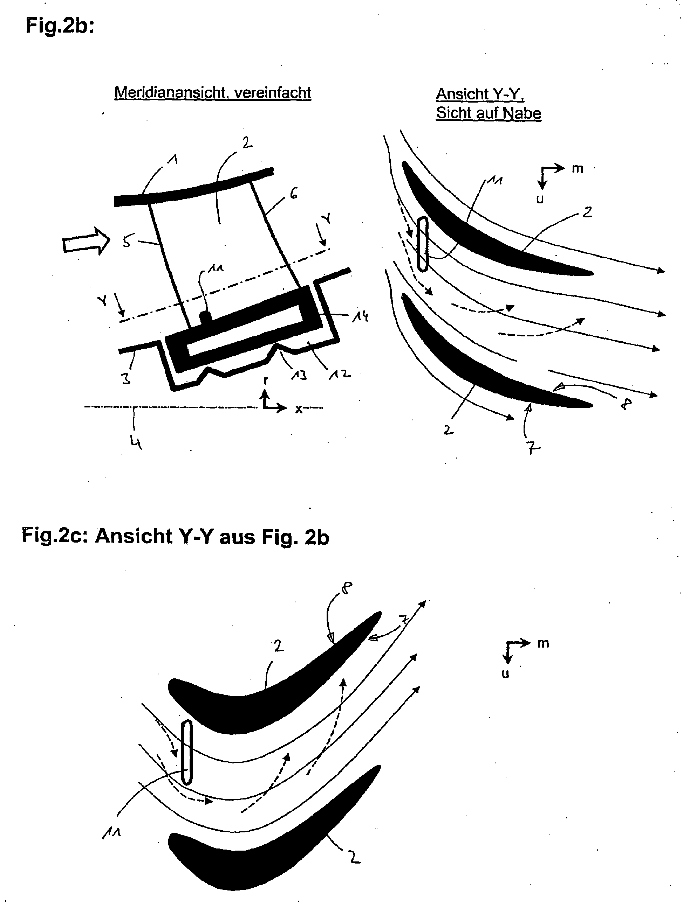

Die Fig.2b zeigt das Beispiel einer erfindungsgemäßen Schaufelreihe, hier eines Stators mit lastübertragenden festem Schaufelende am Gehäuse 1, und festem Schaufelende an der Nabe 3. Zwischen dem Deckband 3 an der Nabe und der Rotorwelle liegt eine rotierende Relativbewegung vor, wobei Dichtspitzen 13 in einer das Deckband umgebenden Kavität 12 für eine Abdichtung sorgen. Ein solches festes Schaufelende wird im Folgenden als "lastfreies festes Schaufelende" bezeichnet.

Die Schaufel ist im Meridianschnitt mit Anströmung von links nach rechts, siehe linker Teil, und in der Ansicht Y-Y (Nabenansicht) im rechten Teil der Fig.2b dargestellt.

Der Stator besitzt an seinem lastfreien festen Schaufelende mindestens eine Seitenwand-Grenzschichtbarriere 11, die in Fig.2b vereinfacht skizziert ist.

Die Fig.2c zeigt die Ansicht Y-Y einer erfindungsgemäßen Schaufelreihe 2, hier eines Stators, für den gleichermaßen erfindungsrelevanten Fall, dass die Schaufelreihe in einer Turbine vorgesehen ist.

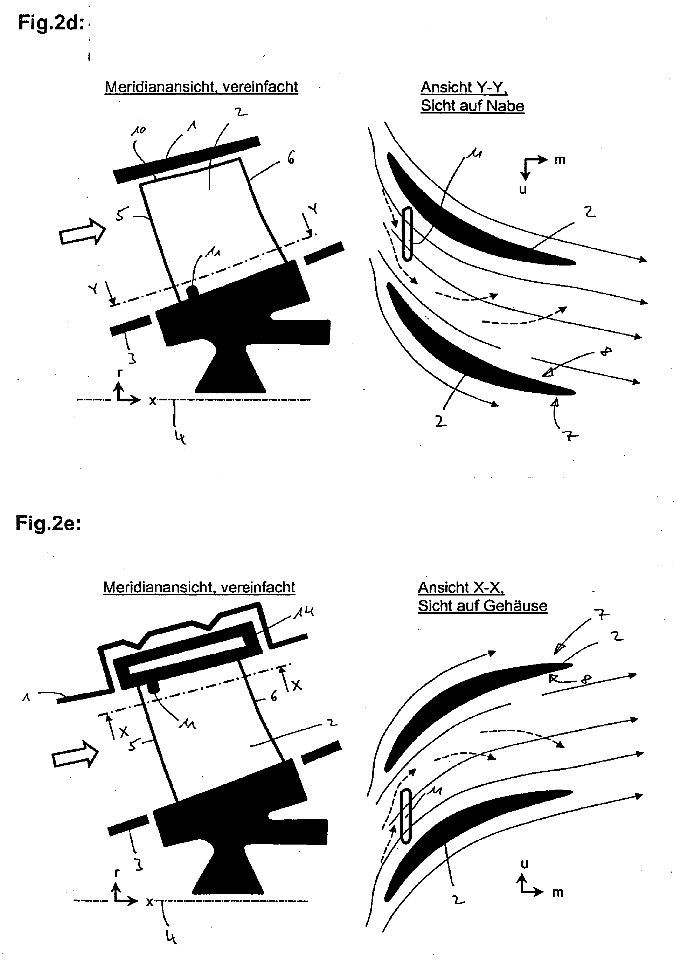

Die Fig.2d zeigt das Beispiel einer erfindungsgemäßen Schaufelreihe, hier eines Rotors mit lastübertragendem festem Schaufelende an der Nabe 3. Am Gehäuse 1 befindet sich ein freies Schaufelende mit Laufspalt 10.

Die Schaufel ist im Meridianschnitt mit Anströmung von links nach rechts, siehe linken Teil der Fig.2d und in der Ansicht Y-Y (Nabenansicht) im rechten Bildteil dargestellt.

Der Rotor besitzt an seinem lastübertragenden festen Schaufelende mindestens eine Seitenwand-Grenzschichtbarriere, die in Fig.2d vereinfacht skizziert ist.

Die Fig.2e zeigt das Beispiel einer erfindungsgemäßen Schaufel 2, hier eines Rotors mit lastübertragenden festem Schaufelende an der Nabe und lastfreiem festem Schaufelende (mit Deckband) am Gehäuse 1. Zwischen Deckband 14 und Gehäuse 1 liegt eine rotierende Relativbewegung vor, wobei Dichtspitzen 13 in einer das Deckband 14 umgebenden Kavität 12 für eine Abdichtung sorgen. Die Schaufel 2 ist im Meridianschnitt mit Anströmung von links nach rechts, siehe linker Teil der Fig.2e und in der Ansicht X-X (Gehäuseansicht) im rechten Teil der Fig.2e dargestellt.

Der Rotor besitzt an seinem lastfreien festen Schaufelende mindestens eine Seitenwand-Grenzschichtbarriere 11, die in Fig.2e vereinfacht skizziert ist.

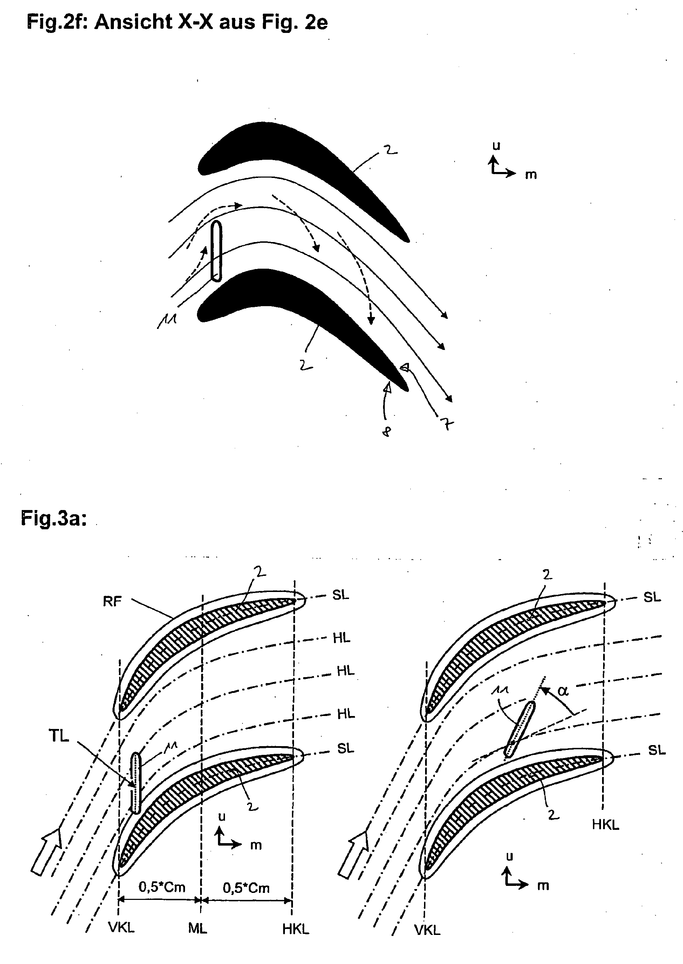

Die Fig.2f zeigt die Ansicht X-X einer erfindungsgemäßen Schaufelreihe 2, hier eines Rotors, für den gleichermaßen erfindungsrelevanten Fall, dass die Schaufelreihe 2 in einer Turbine vorgesehen ist.

Die Schaufelreihe der gezeigten Darstellung in Fig.2a, 2b, 2c und 2d weist nur je eine Grenzschichtbarriere 11 pro Schaufelpassage auf. Abweichend von dieser Darstellung können erfindungsgemäß auch jeweils mehrere Barrieren in einer Schaufelpassage vorgesehen sein.

Dabei ist es erfindungsgemäß günstig, wenn eine Grenzschichtbarriere 11 in der Nähe der Schaufelsaugseite 7, oder in der Nähe der Schaufelvorderkante, oder direkt angrenzend an die Schaufelsaugseite 7 oder direkt angrenzend an die Schaufelvorderkante vorgesehen ist und sich in ihrem weiteren Verlauf im Wesentlichen transversal und schräg zur Hauptströmung von der betreffenden Schaufelvorderkante bzw. Schaufelsaugseite entfernt.

Ebenfalls erfindungsgemäß günstig ist eine Grenzschichtbarriere 11 mit gekrümmtem, sich um die Vorderkante der Schaufel 2 herumlegendem Verlauf.

Alle weiteren graphischen Darstellungen zeigen Verdichter- beziehungsweise Pumpenschaufelprofile, jedoch beziehen sich die aufgezeigten erfindungsgemäßen Merkmale gleichermaßen auf Turbinenschaufelreihen.

Die Fig.3a zeigt sowohl auf ihrer linken als auch rechten Bildseite eine erfindungsgemäße Schaufelreihe 2 mit festem Schaufelende in einem abgewickelten Stromlinienschnitt in der Nähe einer Hauptströmungspfadberandung, wie es etwa der Ansicht X-X oder Y-Y entspricht, d. h. in der durch die Meridianströmungsrichtung m und die Umfangsrichtung u gebildeten Ebene. Zugunsten einer besseren Übersichtlichkeit sind nur zwei Seitenwand-Profilschnitte der erfindungsgemäßen Schaufelreihe 2 dargestellt. Die Anströmung erfolgt gemäß des dicken Pfeils schräg von links nach rechts.

Jedes Profil besitzt eine Skelettlinie SL, die für die Zwecke der vorliegenden Erfindung innerhalb des Profils durch die Mittellinie zwischen Druck- und Saugseite und außerhalb des Profils durch die jeweils tangentiale Fortsetzung dieser Mittellinie an Vorder- und Hinterkante gegeben sein soll.

Es sind drei weitere mit HL bezeichnete Linien eingezeichnet, die durch eine Verschiebung der Skelettlinie in der Umfangsrichtung u erzeugt wurden. Sie stellen Hilfslinien dar, die prinzipiell an jedem Ort der Schaufelpassage zur Verfügung stehen. Die Hilfslinien zeigen im Wesentlichen die Strömungsrichtung innerhalb der Schaufelpassage auf, sodass mit ihrer Hilfe die Winkelausrichtung einer Grenzschichtbarriere, die durch einen entsprechenden strukturellen Aufbau auf der Seitenwandoberfläche vorgesehen ist, relativ zur Hauptströmung lokal bemessen werden kann.

Die linke Seite der Fig.3a zeigt das Beispiel einer sehr einfachen geradlinigen strukturellen Grenzschichtbarriere, die sich erfindungsgemäß vorteilhaft in der vorderen Hälfte der Schaufelpassage befindet und in diesem Beispiel genau in Umfangsrichtung der Maschine verläuft. Die Grenzschichtbarriere weist eine deutliche Schräglage gegenüber den Hilfslinien und somit der Hauptströmung auf. Die Oberkante der Grenzschichtbarriere, d.h. die Verbindungslinie der Punkte lokal größter Erhebung, ist entlang der Barriere mit gepunkteter Linie eingezeichnet. Sie wird hier als Toplinie TL bezeichnet.

Erfindungsgemäße Grenzschichtbarrieren 11 sind hier stromauf der Hinterkantelinie HKL 16 vorgesehen. Vorteilhaft ist es, wenn mindestens eine Grenzschichtbarriere stromauf der mittig zwischen VKL 15 und HKL 16 befindlichen Linie (Mittellinie 17) ML vorgesehen ist. Die Mittellinie 17 besitzt jeweils zu Hinter- und Vorderkantenebene den Abstand einer halben meridionalen Profiltiefe Cm.

Erfindungsgemäß günstig ist die Positionierung einer Grenzschichtbarriere 11 nahe der Profilsaugseite 7 SS oder auch am Rand RF des üblicherweise an Schaufelenden vorgesehenen Rundungsradius, auch Filletradius genannt. Bei Anordnung stromauf der Vorderkantenlinie 15 VKL ist die Nähe zur Skelettlinie günstig.

Die rechte Bildseite zeigt das erfindungsgemäße Beispiel einer weiter stromab in der Schaufelpassage vorgesehenen strukturellen Grenzschichtbarriere 11. Sie beginnt nahe am Filletradius, verläuft räumlich anders, besitzt aber relativ zu den Hilfslinien betrachtet eine ähnliche Winkellage wie die Barriere im linken Bildteil. Hier ist der Anstellwinkelwinkel α eingezeichnet, den die Grenzschichtbarriere im Schnittpunkt ihrer Toplinie (Linie maximaler Erhebung, Definition dazu weiter unten im Text) relativ zu einer Hilfslinie in der m-u-Ebene bildet.

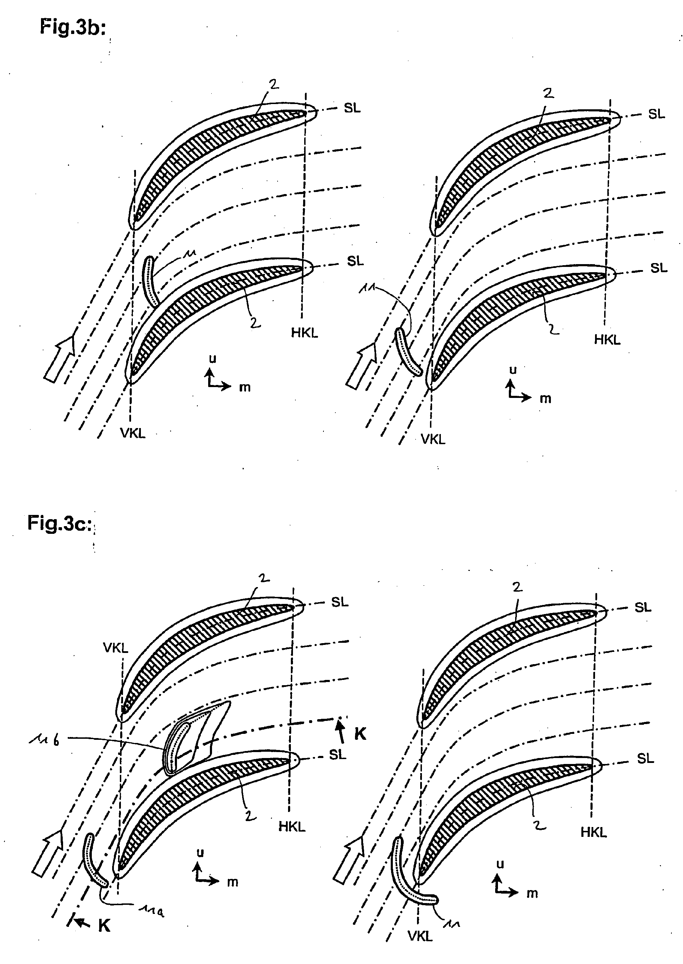

Die Fig.3b zeigt analog zu Fig.3a zwei Beispiele für erfindungsgemäße Anordnungen einer Schaufelreihe 2 mit struktureller Grenzschichtbarriere 11 am festen Schaufelende. Die Toplinie ist auch in dieser Figur jeweils gepunktet eingezeichnet.

Die linke Bildhälfte zeigt eine Grenzschichtbarriere, die im vorderen Teil der Schaufelpassage angeordnet ist und einen nach stromab gekrümmten Verlauf aufweist. Die lokale Neigung der Grenzschichtbarriere gegenüber der Hilfslinienrichtung nimmt mit zunehmender Entfernung von der Schaufelsaugseite ab.

Die rechte Hälfte der Fig.3b zeigt eine ähnlich gestaltete Grenzschichtbarriere, die aber stromauf der Vorderkantenebene VKL und in Nähe der Vorderkante/Saugseite vorgesehen ist.

Auch die Fig.3c zeigt analog zu Fig.3a zwei Beispiele für erfindungsgemäße Anordnungen einer Schaufelreihe mit struktureller Grenzschichtbarriere 11 am festen Schaufelende.

Die linke Hälfte der Fig.3c zeigt hier die Kombination zweier stromabwärts gekrümmter Grenzschichtbarrieren 11, von denen die eine im vorderen Teil der Schaufelpassage angeordnet ist. Diese Grenzschichtbarriere 11 hat eine besondere, durch Höhenlinien dargestellte Konturierung, mit steiler Erhebung gegen die Strömungsrichtung und flacherem Abfall in Strömungsrichtung. Eine zweite Barriere ist weiter stromauf vor der Vorderkantenebene VKL vorgesehen, liegt erfindungsgemäß besonders günstig saugseitig nahe an der Skelettlinie SL des Schaufelprofils und hüllt sich saugseitig um die Schaufelvorderkante. Desweiteren ist in der linken Hälfte der Fig.3c ein Schnitt K-K eingezeichnet, in dem in folgenden Figuren Merkmale der Erfindung festgelegt werden. Der Schnitt K-K kann entlang einer beliebigen Hilfslinie HL und stets senkrecht zur u-m-Ebene verlaufen, sodass in ihm die Form einer Grenzschichtbarriere 11 annährend in Hauptströmungsrichtung betrachtet werden kann.

Die rechte Hälfte der Fig.3c zeigt eine Anordnung mit Grenzschichtbarriere 11, die stromauf und nahe der Vorderkante vorgesehen ist und sich saugseitig wie auch druckseitig um die Vorderkante legt.

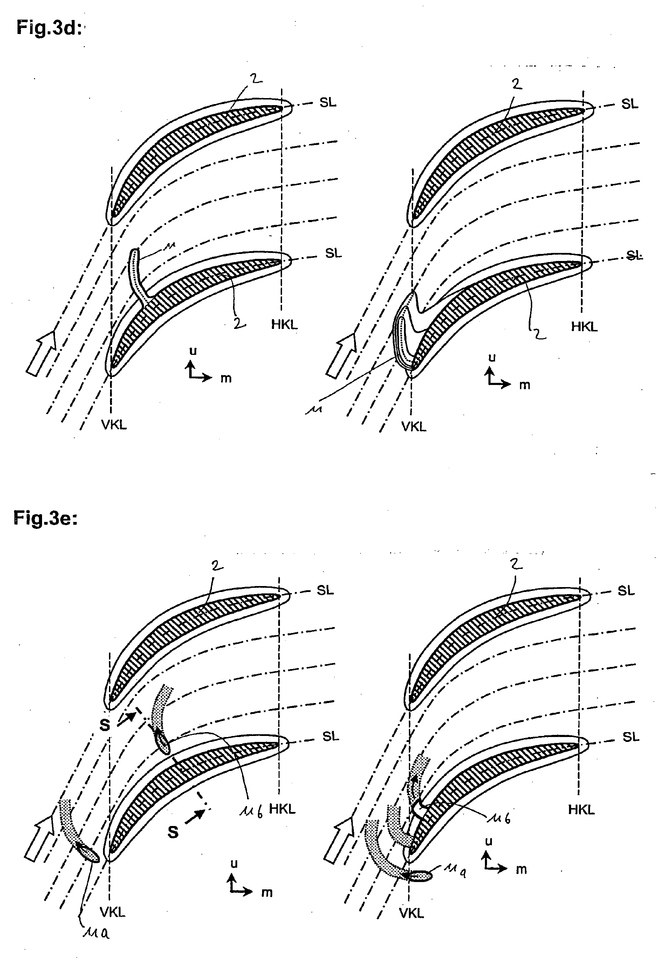

Auch die Fig.3d zeigt analog zu Fig.3a zwei Beispiele für erfindungsgemäße Anordnungen einer Schaufelreihe mit struktureller Grenzschichtbarriere 11 am festen Schaufelende.

Die linke Hälfte der Fig.3d zeigt eine nach stromab gekrümmte Grenzschichtbarriere 11, die im vorderen Teil der Schaufelpassage angeordnet ist und direkt an die Schaufelsaugseite angrenzt. Die lokale Neigung der Grenzschichtbarriere gegenüber der Hilfslinienrichtung nimmt mit zunehmender Entfernung von der Schaufelsaugseite ab, entsprechend einer stetigen Abnahme des Anstellwinkelwinkels α, der in erfindungsgemäß günstigen Fällen im Bereich 0°< α < 120° liegen sollte.

Die rechte Hälfte der Fig.3d zeigt eine ähnlich gestaltete Grenzschichtbarriere, die aber direkt angrenzend an die Vorderkante vorgesehen ist. Diese Grenzschichtbarriere hat eine besondere, durch Höhenlinien dargestellte Konturierung, mit steiler Erhebung gegen die Strömungsrichtung und flacherem Abfall in Strömungsrichtung.

Auch die Fig.3e zeigt weitere Beispiele für erfindungsgemäße Anordnungen einer Schaufelreihe mit Grenzschichtbarriere 11 am festen Schaufelende. Jedoch waren die Grenzschichtbarrieren 11 gemäß Fig.3a bis Fig.3d als struktureller Aufbau auf die Seitenwandkontur vorgesehen, d. h. die Grenzschichtbarriere 11 ist ein festkörperhafter Bestandteil der Schaufelreihenbaugruppe, gegeben durch Formgebung der Seitenwandkontur oder durch ein befestigtes Zusatzbauteil. Die Fig.3e zeigt hingegen Grenzschichtbarrieren 11, die durch einen Fluidstrahl gegeben sind. Der Fluidstrahl wird schräg oder gegebenenfalls auch quer zur Hauptströmungsrichtung injiziert und ist so ausgerichtet, dass er von der Schaufelsaufseite weg weist und nach Eintreten in den Hauptströmungspfad tangential zur Seitenwandkontur verläuft. Vorteilhaft ist ein Winkel zwischen Hilfslinie und Strahlaustrittsrichtung im Bereich von 60° bis 120°.

Die linke Hälfte der Fig.3e zeigt einen Fluidquerstrahl, der in der vorderen Hälfte der Schaufelpassage von einem Punkt nahe der Saugseite aus quer zur Hauptströmung auf die Seitenwandkontur geschickt wird. Bei Injektion eines solchen Strahls entsteht eine nach stromab gekrümmte Grenzschichtbarriere 11, die wie in diesem Bild nicht dargestellt, erfindungsgemäß auch direkt an der Saugseite starten kann.

Die lokale Neigung der fluidischen Grenzschichtbarriere 11 nimmt gegenüber der Hilfslinienrichtung mit zunehmender Entfernung von der Schaufelsaugseite ab. Eine zweite ähnlich gestaltete Grenzschichtbarriere 11 ist hier stromauf der Vorderkantenebene VKL vorgesehen. Die Injektionsöffnung liegt in diesem Fall nahe der konvex gekrümmten Seite der Skelettlinie und nahe der Vorderkante. Außerdem ist ein Schnitt S-S eingezeichnet, der hier beispielhaft durch die in der Passage befindliche fluidische Grenzschichtbarriere verläuft. Der Schnitt S-S wird für weitere Darstellung von Merkmalen benötigt.

Die rechte Hälfte der Fig.3e zeigt eine fluidische Grenzschichtbarriere 11 stromauf der Vorderkantenebene VKL. Die Injektionsöffnung liegt auch hier nahe der Vorderkante, jedoch an der konkav gekrümmten Seite der Skelettlinie nahe der Druckseite. Die Strahlrichtung bleibt jedoch dadurch geprägt, dass sie stets von der konvex gekrümmten Seite einer Hilfslinie HL weg weist. Desweiteren zeigt die linke Bildhälfte eine zweite Grenzschichtbarriere an der Saugseite nahe der Vorderkante, die direkt an der Saugseite beginnt und durch einen quer zur Hauptströmung aus der Saugseite austretenden Fluidstrahl gebildet wird. Zudem zeigt die linke Bildhälfte in der Passage eine dritte Grenzschichtbarriere 11, die teilweise strukturell und angrenzend an die Saugseite vorgesehen ist, aber im weiteren Verlauf durch einen aus dem strukturellen Teil austretenden Fluidquerstrahl gebildet wird.

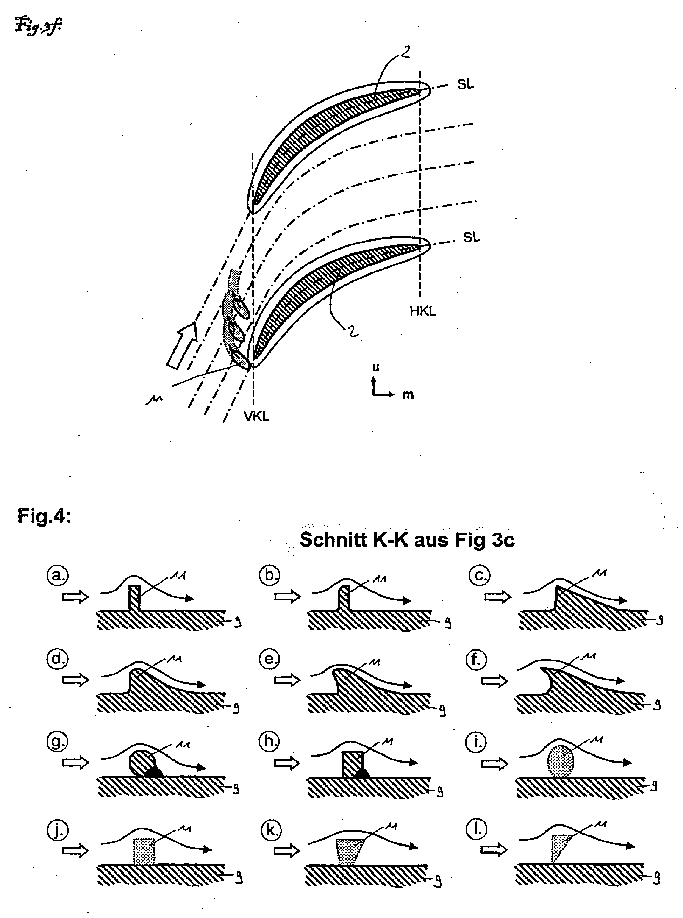

Die Fig.3f zeigt eine erfindungsgemäße Grenzschichtbarriere, aufgebaut durch eine Reihe miteinander verschmelzender Fluidquerstrahle. Die Strahlaustrittsöffnungen sind hier beispielhaft im Bereich der Vorderkantenebene vorgesehenen, können aber auch an einem anderen Ort in oder vor der Schaufelpassage liegen. Besonders vorteilhaft ist es im Fall der Vorsehung mehrerer Fluidquerstrahle, die Austrittsöffnungen beziehungsweise die Mittelpunkte der Austrittsöffnungen, transversal zur Hilfslinienrichtung gestaffelt anzuordnen, **dadurch gekennzeichnet, dass** zwei benachbarte Austrittsöffnungen auf unterschiedlichen Hilfslinien vorgesehen sind und die weiter stromab befindliche Austrittsöffnung - von einer konvexen Seite zu einer konkaven Seite einer Hilfslinie fortschreitend - versetzt zu der weiter stromauf befindlichen Austrittsöffnung angeordnet ist.

Die Fig.4 zeigt unterschiedliche erfindungsgemäße Querschnittsformen der Grenzschichtbarriere 11 in einem Schnitt K-K, wie er in Fig.3c eingezeichnet ist. Der Schnitt K-K verläuft stets entlang einer Hilfslinie HL und senkrecht zur u-m-Ebene. Die in Fig.3c eingezeichnete Lage des Schnittes K-K dient der prinzipiellen Veranschaulichung. Der Schnitt K-K kann selbstverständlich auch auf jeder anderen Hilfslinie HL oder einer Skelettlinie SL aufbauen. Die Fig.4 umfasst 12 unterschiedliche Beispiele einer erfindungsgemäßen Querschnittsform einer Grenzschichtbarriere 11, nämlich die Bildteile (a.) bis (1.). Davon betreffen die Bildteile (a.) bis (h.) strukturelle Grenzschichtbarrieren 11, die Bildteile (i.) und (l.) betreffen fluidische Grenzschichtbarrieren 11.

Bildteil (a.) zeigt eine dünne, unprofilierte, strukturelle, sich von der Seitenwand erhebende Barriere 11 mit Rechteckquerschnitt die, wie hier dargestellt, integral mit dem Seitenwandbauteil vorgesehen ist, oder (wie hier nicht gezeigt) als separates Bauteil befestigt sein kann (durch Fügen, Schweißen, Löten, Stiften, Schrauben, usw.). Die der Hauptströmung zugewande Seite des Barrierenprofils ist besonders erfindungsrelevant; sie erhebt sich hier etwa senkrecht von der Seitenwandoberfläche.

Bildteil (b.) zeigt ebenfalls eine dünne, strukturelle Barriere 11. Der Querschnitt ist im Wesentlichen rechteckig und besitzt zur besseren Überströmbarkeit eine Rundung an der der Zuströmung zugewandten Seite.

Bildteil (c.) zeigt eine sich steil von der Seitenwand erhebende, als Spitze ausgeprägte strukturelle Barriere 11. Ein flaches Auslaufen der Barriere 11 auf der Abströmseite ist erfindungsgemäß vorteilhaft.

Bildteil (d.) zeigt eine sich steil von der Seitenwand erhebende strukturelle Barriere 11, die auf der Zuströmseite der im Bildteil (b.) gleicht. Zusätzlich ist hier ein strömungsgünstigeres flaches Auslaufen der Barriere auf der Abströmseite vorgesehen.

Bildteil (e.) zeigt eine stromaufwärts geneigte, sich steil von der Seitenwand erhebende strukturelle Barriere 11, die mit der Seitenwand eine Kehle bildet. Auch hier ist ein strömungsgünstigeres flaches Auslaufen der Barriere auf der Abströmseite vorgesehen.

Bildteil (f.) zeigt eine stromaufwärts geneigte, sich steil von der Seitenwand erhebende strukturelle Barriere 11, die mit der Seitenwand eine stark ausgeprägte Kehle bildet, wobei die Zuströmseite und die Abströmseite der Barriere gemeinsam, ähnlich einer überkippenden Meereswelle, eine stromauf gerichtete Kante bilden.

Das Merkmal eines steilen Anstieges der Barriere auf der Zuströmseite und ein weniger starkes Abfallen auf der Abströmseite sind erfindungsgemäß grundsätzlich besonders vorteilhaft.

Bildteil (g.) zeigt eine von der Seitenwand erhebende strukturelle Barriere, die einen rundlichen Querschnitt besitzt und durch eine Schweiß- oder Lötnaht an der Seitenwand befestigt ist.

Bildteil (h.) zeigt eine von der Seitenwand erhebende strukturelle Barriere, die einen viereckigen Querschnitt besitzt und durch eine Schweiß- oder Lötnaht an der Seitenwand befestigt ist.

Bildteil (i.) zeigt eine fluidische Grenzschichtbarriere 11 mit einem im Wesentlichen ovalen und an der Seitenwand anliegenden Querschnitt, wie er durch Fluidinjektion auf die Seitenwandoberfläche aus einer ovalen Öffnung entsteht, die in der Seitenwand oder in der Schaufeloberfläche vorgesehen sein kann.

Bildteil (j.) zeigt eine fluidische Grenzschichtbarriere 11 mit einem im Wesentlichen rechteckigen und an der Seitenwand anliegenden Querschnitt, wie er durch Fluidinjektion auf die Seitenwandoberfläche aus einer rechteckigen Öffnung entsteht, die in der Seitenwand oder in der Schaufeloberfläche vorgesehen sein kann.

Bildteil (k.) zeigt eine fluidische Grenzschichtbarriere 11 mit einem im Wesentlichen viereckigem und an der Seitenwand anliegenden Querschnitt, wie er durch Fluidinjektion auf die Seitenwandoberfläche aus einer viereckigen Öffnung entsteht, die in der Seitenwand oder in der Schaufeloberfläche vorgesehen sein kann. Vorteilhaft ist es, wenn der Viereckquerschnitt zur Seitenwandkontur hin, wie hier dargestellt, dünner wird.

Bildteil (I.) zeigt eine fluidische Grenzschichtbarriere 11 mit einem im Wesentlichen dreieckigem und an der Seitenwand anliegenden Querschnitt, wie er durch Fluidinjektion auf die Seitenwandoberfläche aus einer dreieckigen Öffnung entsteht, die in der Seitenwand oder in der Schaufeloberfläche vorgesehen sein kann. Vorteilhaft ist es, wenn der Dreieckquerschnitt, wie hier dargestellt, mit einer Ecke die Seitenwandkontur tangiert.

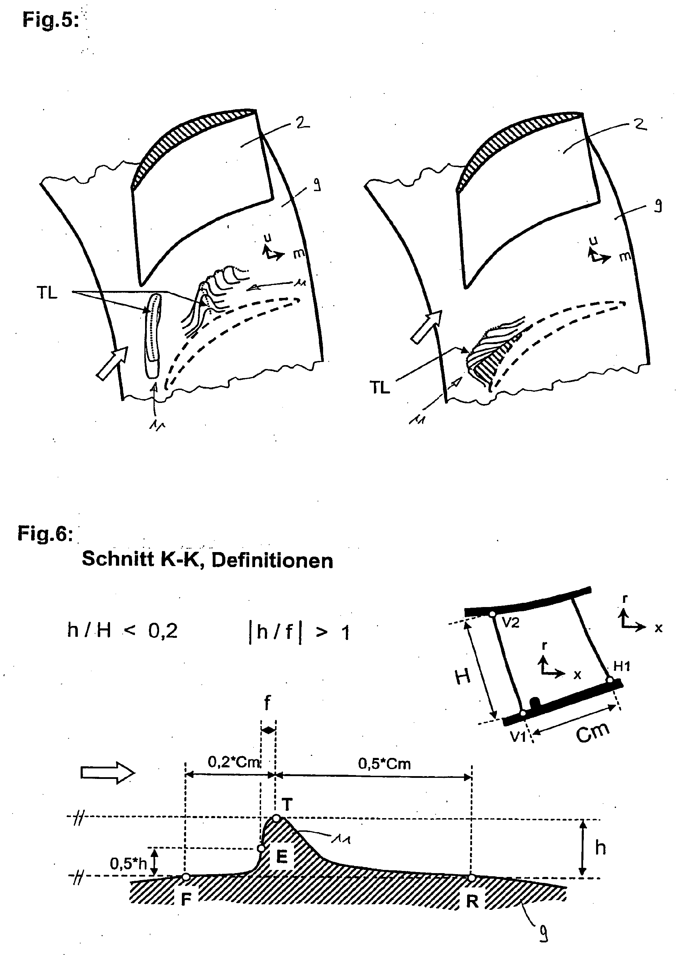

Die Fig.5 zeigt zwei perspektivische Darstellungen einer erfindungsgemäßen Schaufelreihe 2 mit struktureller Grenzschichtbarriere 11. Zur besseren Einsicht in die Schaufelpassage ist eine Schaufel 2 entfernt und lediglich ihr Fußabdruck auf der Seitenwandkontur gestrichelt angedeutet. Die Querschnitte der Barriere 11 an den unterschiedlichen Positionen entsprechen den Maßregeln der Fig.4.

Der Verlauf der Barrieren 11 ist bei Fortschreiten in Richtung der gegenüberliegenden Schaufeldruckseite zunehmend weniger gegen die Richtung der Hauptströmung geneigt. Der Verlauf einer erfindungsgemäßen Grenzschichtbarriere 11 wird im Weiteren mit Hilfe der Toplinie TL der Barriere 11 gemessen. Die Toplinie TL ergibt sich aus der Verbindung der Punkte maximaler Erhebung gegenüber der Seitenwandkontur. Eine genaue Definition der Punkte maximaler Erhebung folgt in Fig.6.

Die linke Hälfte der Fig.5 zeigt eine Grenzschichtbarriere 11 beginnend in der Nähe der Saugseite in der Schaufelpassage, wobei die Barriere 11 durch ein oben abgerundetes, aber sonst einfaches stegartiges Hindernis gebildet wird.

Die rechte Bildhälfte der Fig.5 zeigt eine Grenzschichtbarriere 11 beginnend direkt an der Schaufelsaugseite nahe der Vorderkante, wobei die Barriere 11 entlang ihres Verlaufes in der Schaufelpassage einen veränderlichen Querschnitt aufweist und insbesondere an und in der Nähe der Saugseite ein flaches abströmseitiges Auslaufen der Barriere 11 vorgesehen ist.

Die Fig.6 dient der Definition der Punkte maximaler Erhebung. Sie zeigt eine Grenzschichtbarriere 11 in einem Schnitt K-K (der auf einer Hilfslinie HL errichtet ist und entsprechend gekrümmt verläuft). In der Umgebung der Grenzschichtbarriere 11 sind die Punkte F und R eingezeichnet. Parallel zur Verbindungsgeraden der Punkte F und R verläuft eine zweite Gerade, die als Tangente an dem Punkt T der maximalen Erhebung der Barriere anliegt. In Richtung parallel zu den zwei Geraden besitzt der Abstand zwischen F und T ein Maß von 0,2.Cm, d. h. 20% der meridionalen Profiltiefe Cm des Schaufelprofilschnittes (Abstand des Vorderkanten- und Hinterkantenseitenwandpunktes an der mit Barriere versehenen Schaufelende, siehe Skizze rechts oben in Fig.6). Der Abstand zwischen R und T besitzt ein Maß von 0,5.Cm. Wenn auf diese Weise der Punkt T maximaler Erhebung identifiziert ist, können erfindungsgemäß besonders günstige Größen festgelegt werden. Die Erhebungshöhe h liegt somit als Abstand zwischen dem Punkt T und der Geraden durch F und R. Erfindungsgemäß vorteilhaft sind Erhebungshöhen der Grenzschichtbarriere gemäß h/H < 0,2, wobei H der Abstand zwischen dem inneren und äußeren Seitenwandpunkt an der Vorderkante ist.

Es sei hier noch angemerkt, dass einer der Punkte F und R aufgrund einer extremen Positionierung der strukturellen Barriere außerhalb des beschaufelten Raumes der betrachteten Schaufelreihe 2 liegen oder sogar in den beschaufelten Raum einer benachbarten Schaufelreihe 2 fallen kann. Weiterhin kann es sein, dass einer der Punkte F und R in eine Zone nicht vorhandener Seitenwandkontur fällt, so wie sie beispielsweise durch den axialen Spalt zwischen einer Rotorscheibe und einem Statorinnendeckband gegeben ist. In einem solchen Fall ist der Punkt F beziehungsweise R auf einer fiktiven geradlinigen Überbrückung des Seitenwand-Axialspaltes zu platzieren. Diese besagte Überbrückungslinie ist als bestmögliche glatte Ergänzung des fehlenden Seitenwandabschnitts vorzusehen.

Die Steilheit der Zuströmseite der Grenzschichtbarriere 11 ist für eine hohe Wirksamkeit besonders wichtig. Um diese Steilheit zu quantifizieren, wird zusätzlich ein Hilfspunkt E betrachtet, der im Abstand h/2 von der Geraden durch F und R auf der Zuströmflanke der Grenzschichtbarriere angeordnet ist. Dadurch ergibt sich zwischen dem Toppunkt T und dem Hilfspunkt E ein Abstand f. Der Quotient h / f ist ein Maß für die Steilheit der Zuströmseite. Erfindungsgemäß besonders günstige Anordnungen erhält man wenn gilt: Betrag (h / f) > 1.

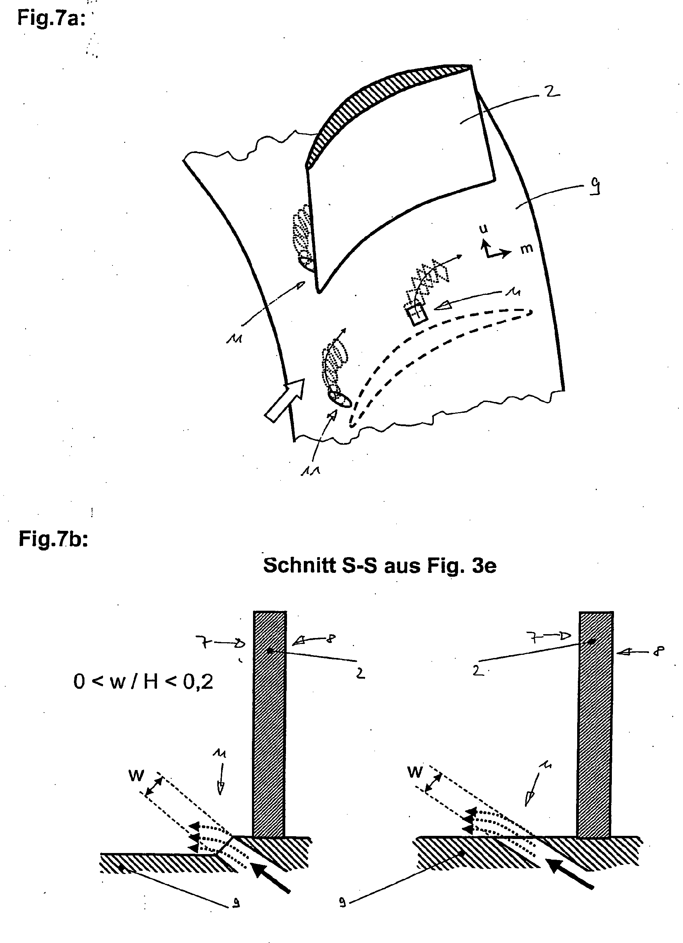

Die Fig.7a zeigt eine perspektivische Darstellung einer erfindungsgemäßen Schaufelreihe 2 mit fluidischer Grenzschichtbarriere 11. Zur besseren Einsicht in die Schaufelpassage ist eine Schaufel entfernt und lediglich ihr Fußabdruck auf der Seitenwandkontur gestrichelt angedeutet. Es sind hier beispielhaft zwei durch einen Fluidquerstrahl generierte Grenzschichtbarrieren 11 vorgesehen. Der Verlauf der Barrieren ist bei Fortschreiten in Richtung der gegenüberliegenden Schaufeldruckseite zunehmend weniger gegen die Richtung der Hauptströmung geneigt (entsprechend einer Halbhufeisenform). In der Nähe der Vorderkante wird die Grenzschichtbarriere 11 durch einen Fluidquerstrahl gebildet, der durch eine ovale Öffnung injiziert wird.

Weiter stromab in der Schaufelpassage wird eine Grenzschichtbarriere 11 durch einen Fluidquerstrahl gebildet, der durch eine rechteckige Öffnung injiziert wird.

Die Fig.7b zeigt zwei erfindungsgemäße Beispiele einer durch Fluidquerstrahl generierten Grenzschichtbarriere 11 im Schnitt S-S, der in Fig.3e, linke Hälfte, definiert ist. Dargestellt ist jeweils die Hauptströmungspfadberandung (Seitenwand) und eine sich daran anschließendes Schaufelprofil im Bereich der Strahlinjektionsstelle.

In der linken Hälfte der Fig.7b ist die Austrittsöffnung des Fluidquerstrahls im Bereich eines Rücksprunges in der Seitenwandkontur vorgesehen.

In der rechten Bildhälfte ist die Austrittsöffnung des Fluidquerstrahls in einer absatzfreien Seitenwandkontur vorgesehen.

In beiden Ausführungsbeispielen erfolgt die Zuführung des Fluidquerstrahls unter einem flachen Winkel zur Seitenwandkontur, mit dem Ziel, dass der Strahl nach seinem Eintritt in die Hauptströmung sich tangential entlang der Seitenwand entwickelt. Das Fluid wird von der Seitenwand aus zugeführt.

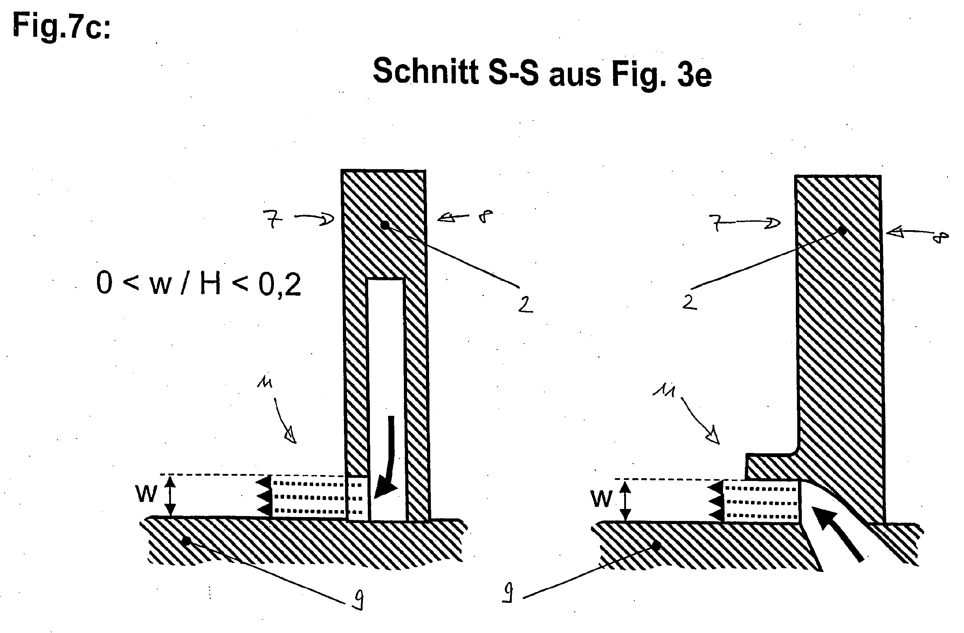

Die Fig.7c zeigt zwei weitere erfindungsgemäße Beispiele einer durch Fluidquerstrahl generierten Grenzschichtbarriere im Schnitt S-S.

In der linken Hälfte der Fig.7c ist die Austrittsöffnung des Fluidquerstrahls in der Schaufelsaugseite unmittelbar an der Seitenwand vorgesehen. Das Fluid strömt so quer zur Hauptströmung tangential auf die Seitenwandkontur aus. Das Fluid wird von einem Hohlraum in der Schaufel zugeführt.

In der rechten Hälfte der Fig.7c ist die Austrittsöffnung des Fluidquerstrahls in einer kurzen und an die Schaufelsaugseite grenzenden strukturellen Grenzschichtbarriere 11 vorgesehen; auch hier unmittelbar an der Seitenwand, um einen tangentialen Querstrahl zu erzeugen. Das Fluid wird hier von einem Hohlraum in der Seitenwand der Austrittsöffnung zugeführt. Für alle erfindungsgemäßen Varianten einer fluidischen Grenzschichtbarriere 11 ist es vorteilhaft, wenn die anfängliche Höhe w des Fluidstrahls im Bereich von 0 < w / H < 0,2 liegt.

Die vorliegende Erfindung erlaubt eine deutlich höhere aerodynamische Belastbarkeit von Rotoren und Statoren in Strömungsmaschinen, bei gleichbleibendem oder erhöhtem Wirkungsgrad. Eine Reduzierung der Teilezahl und des Komponentengewichts von mehr als 20% scheint erreichbar.

Die Erfindung kann auch wie folgt beschrieben werden:

Strömungsmaschine mit einem Hauptströmungspfad, in welchem zumindest eine Reihe von Schaufeln angeordnet ist, wobei mindestens ein Schaufelende einer Schaufelreihe eine feste Verbindung zur Hauptströmungspfadberandung aufweist und im Bereich dieses festen Schaufelendes an der Seitenwand mindestens eine längliche hindernisartige Erhöhung, genannt Grenzschichtbarriere, vorgesehen ist, die wenigstens in einem Teil ihres Verlaufes schräg zur Hauptströmung angeordnet ist und auf diese Weise seitenwandnah strömendes Fluid in Richtung der Schaufeldruckseite ablenkt, wobei bevorzugt vorgesehen ist, dass:
a.) jedem Schaufelprofilschnitt an der Seitenwand des mit der mindestens einen Grenzschichtbarriere versehenen festen Schaufelendes eine Skelettlinie zugeordnet ist, die innerhalb des Profils durch die Mittellinie zwischen Druck- und Saugseite und außerhalb des Profils durch die jeweils tangentiale Fortsetzung dieser Mittellinie an der Vorder- und Hinterkante definiert ist
b.) im Bereich zwischen den Skelettlinien zwei benachbarter Seitenwandprofilschnitte eine Schar von Hilfslinien entlang der Seitenwand gegeben ist, wobei jede Hilfslinie durch eine reine Verschiebung der Seitenwandprofilskelettlinie in Umfangsrichtung u entsteht und wobei der Verlauf einer Hilfslinie an jedem beliebigen Ort im Bereich des besagten festen Schaufelendes den Verlauf der Hauptströmung charakterisiert,
c.) die mindestens eine Grenzschichtbarriere einen Anfangspunkt besitzt, von dem aus sie sich mit einer bezüglich der Hilfslinien transversalen Richtungskomponente fortsetzt, sodass die Grenzschichtbarriere die Schar der Hilfslinien durchkreuzt, derart, dass der Verlauf der Grenzschichtbarriere vom Startpunkt ausgehend sich stetig von der konvexen Seite einer Hilfslinie entfernt und sich der konkaven Seite einer benachbarten Hilfslinie nähert, und
d.) der Verlauf einer jeden Grenzschichtbarriere anhand ihrer Toplinie, d. h. der Verbindungslinie der Punkte maximaler Erhebung der Grenzschichtbarriere, gemessen wird,
wobei bevorzugt mindestens eine Grenzschichtbarriere wenigstens in einem Teilabschnitt als festkörperhaftes mit der Seitenwand strukturell verbundenes Element der Schaufelreihenbaugruppe ausgebildet ist,
wobei bevorzugt mindestens eine Grenzschichtbarriere wenigstens in einem Teilabschnitt als wenigstens ein seitenwand-tangentialer Fluidstrahl ausgebildet ist,
wobei bevorzugt der Anfangspunkt mindestens einer Grenzschichtbarriere in der Umgebung des durch die Schaufelvorderkante und die Schaufelsaugseite gebildeten Profilabschnitts vorgesehen ist,
wobei bevorzugt mindestens eine Grenzschichtbarriere in dem durch die die Schaufelvorderkante und die Schaufelsaugseite gebildeten Konturbereich direkt an die Schaufel angrenzt,
wobei bevorzugt der Startpunkt der Grenzschichtbarriere stromauf der Schaufelhinterkantenebene vorgesehen ist,
wobei bevorzugt der Startpunkt der Grenzschichtbarriere stromauf der zwischen Schaufelvorderkante und Schaufelhinterkante mittig angeordneten Ebene, und somit in der vorderen Hälfte der Schaufelpassage, vorgesehen ist,
wobei bevorzugt der Startpunkt der Grenzschichtbarriere im Bereich von +/-15% der meridionalen Profiltiefe Cm um die Vorderkantenebene vorgesehen ist,
wobei bevorzugt, ausgehend vom Startpunkt der Grenzschichtbarriere der zwischen der Toplinie und einer Hilfslinie eingeschlossene Anstellwinkel α entlang des Verlaufes der Grenzschichtbarriere stetig kleiner wird und im Bereich 0°< α < 120° liegt,
wobei bevorzugt die Grenzschichtbarriere sich, der Form eines Hufeisens ähnelnd, um die Schaufelvorderkante legt,
wobei bevorzugt die Grenzschichtbarriere gänzlich durch mindestens einen Fluidstrahl gebildet wird, der aus einer Öffnung in einer der Seitenwand- und Schaufeloberflächen in die Hauptströmung injiziert wird, wobei die Geometrie der Öffnung und die Ausrichtung des in die Öffnung mündenden Zufuhrkanals so beschaffen ist, dass sich ein Verlauf des austretenden Fluidstrahls tangential zur Seitenwandoberfläche ergibt,
wobei bevorzugt die Barriere durch mehrere in Reihe angeordnete Fluidquerstrahle gebildet wird und die Mittelpunkte der einzelnen Strahlaustrittsöffnungen transversal zur Hilfslinienrichtung gestaffelt vorgesehen sind, derart, dass die Mittelpunkte zweier benachbarter Austrittsöffnungen auf unterschiedlichen Hilfslinien ausgebildet sind und ein weiter stromab befindlicher Austrittsöffnungsmittelpunkt - in Richtung von einer konvexen Seite zu einer konkaven Seite einer Hilfslinie fortschreitend - versetzt zu einem weiter stromauf befindlichen Austrittsöffnungsmittelpunkt angeordnet ist.
wobei bevorzugt der Anstellwinkel α zwischen der Hilfslinie an der Öffnung und der Strahlaustrittsrichtung zwischen 60° und 120° beträgt,
wobei bevorzugt sich die Querschnittskontur der Grenzschichtbarriere auf der der Zuströmung zugewandten Seite in mindestens einer Ebene K, die durch den Schnitt einer senkrecht zu der aus Meridionalrichtung m und Umfangsrichtung u gebildeten und auf einer Hilfslinie fußenden Ebene mit der Grenzschichtbarriere gegeben ist, steil von der Seitenwand erhebt,
wobei bevorzugt sich die Querschnittskontur der Grenzschichtbarriere auf der der Zuströmung zugewandten Seite in mindestens einer Ebene K im Wesentlichen senkrecht von der Seitenwand erhebt,
wobei bevorzugt die Querschnittskontur der Grenzschichtbarriere auf der der Zuströmung zugewandten Seite in mindestens einer Ebene K eine Kehle ausbildet,
wobei bevorzugt die Querschnittskontur der Grenzschichtbarriere auf der der Zuströmung abgewandten Seite in mindestens einer Ebene K flach ausläuft,
wobei bevorzugt die Erhebungshöhe h der Querschnittskontur der Grenzschichtbarriere in mindestens einer Ebene K ein Maß von 0,2.H nicht übersteigt,
wobei H der Abstand zwischen dem inneren und äußeren Seitenwandpunkt an der Vorderkante ist,
wobei bevorzugt die Grenzschichtbarriere wenigstens teilweise durch einen Fluidstrahl gebildet wird und der Querschnitt der Öffnung, aus der der Fluidstrahl austritt so geformt ist, dass der Strahl in seinem in unmittelbarer Nähe der Seitenwandkontur injizierten Teil wenig Fluid führt, bedingt durch einen dort örtlich kleinen Öffnungsquerschnitt, und in seinem weiter von der Seitenwandkontur entfernt injizierten Teil mehr Fluid führt, bedingt durch einen dort örtlich großen Öffnungsquerschnitt, sodass die Fluidmasse innerhalb des Strahls mit dem Abstand zur Seitenwand zunimmt, wobei dies und im Extremfall durch eine im Wesentlichen dreiecksförmige Strahlaustrittsöffnung zu erreichen ist.

### Bezugszeichenliste

- 1: Gehäuse
- 2: Schaufelreihe / Schaufel / Schaufelprofil
- 3: Nabe
- 4: Maschinenachse
- 5: Schaufelvorderkante VK
- 6: Schaufelhinterkante HK
- 7: Saugseite SS
- 8: Druckseite DS
- 9: Hauptströmungspfadberandung am festen Schaufelende
- 10: Laufspalt
- 11: Seitenwandgrenzschichtbarriere / Barriere
- 12: Kavität
- 13: Dichtspitze
- 14: Deckband
- 15: Vorderkantenlinie VKL
- 16: Hinterkantenlinie HKL
- 17: Mittellinie ML

## Patentansprüche

1. Strömungsmaschine mit einem Hauptströmungspfad, in welchem zumindest eine Reihe von Schaufeln (2) angeordnet ist, wobei mindestens ein Schaufelende einer Schaufelreihe (2) eine feste Verbindung zur Hauptströmungspfadberandung aufweist und im Bereich dieses festen Schaufelendes an einer Seitenwand (9) mindestens eine längliche hindernisartige Grenzschichtbarriere (11), vorgesehen ist, wobei die Grenzschichtbarriere (11) wenigstens in einem Teil ihres Verlaufes schräg zur Hauptströmung angeordnet ist und zur Ablenkung von seitenwandnah strömendem Fluid in Richtung der Schaufeldruckseite ausgebildet ist, wobei:
a.) jedem Schaufelprofilschnitt an der Seitenwand (9) des mit der mindestens einen Grenzschichtbarriere (11) versehenen festen Schaufelendes eine Skelettlinie zugeordnet ist, die innerhalb des Profils durch die Mittellinie zwischen Druck- und Saugseite und außerhalb des Profils durch die jeweils tangentiale Fortsetzung dieser Mittellinie an der Vorder- und Hinterkante definiert ist,
b.) im Bereich zwischen den Skelettlinien zweier benachbarter Seitenwandprofilschnitte eine Schar von Hilfslinien (HL) entlang der Seitenwand (9) gebildet ist, wobei jede Hilfslinie (HL) durch eine reine Verschiebung der Seitenwandprofilskelettlinie in Umfangsrichtung u entsteht und wobei der Verlauf einer Hilfslinie (HL) an jedem beliebigen Ort im Bereich des besagten festen Schaufelendes den Verlauf der Hauptströmung charakterisiert,
c.) die mindestens eine Grenzschichtbarriere (11) einen Anfangspunkt aufweist, von dem aus sie sich mit einer bezüglich der Hilfslinien (HL) transversalen Richtungskomponente fortsetzt, sodass die Grenzschichtbarriere (11) die Schar der Hilfslinien (HL) durchkreuzt, derart, dass der Verlauf der Grenzschichtbarriere (11) vom Startpunkt ausgehend sich stetig von der konvexen Seite einer Hilfslinie (HL) entfernt und sich der konkaven Seite einer benachbarten Hilfslinie (HL) nähert, und
d.) der Verlauf einer jeden Grenzschichtbarriere (11) anhand ihrer, durch eine Verbindungslinie der Punkte maximaler Erhebung der Grenzschichtbarriere (11) gebildeten Toplinie (TL), bestimmt ist,
**dadurch gekennzeichnet, dass** sich die Querschnittskontur der Grenzschichtbarriere (11) auf der der Strömung zugewandten Seite in mindestens einem Schnitt (K-K) entlang einer beliebigen Hilfslinie (HL) und senkrecht zu der aus der Meridionalrichtung (m) und der Umfangsrichtung (u) gebildeten und auf einer Hilfslinie (HL) fußenden Ebene mit der Grenzschichtbarriere (11) in einem steilen Winkel von der Seitenwand (9) erhebt,
wobei die Steilheit des Winkels Betrag (h/f) > 1 beträgt, wobei h die Erhebungshöhe der Grenzschichtbarriere (11) ist, definiert als Abstand zwischen einem Punkt (T) der maximalen Erhebung der Grenzschichtbarriere (11) und einer Geraden durch einen Punkt (F) auf der Seitenwand (9), der 20% der meridionalen Profiltiefe (Cm) des Schaufelprofils auf der Geraden in Strömungsrichtung vor dem Punkt (T) der maximalen Erhebung der Grenzschichtbarriere (11) liegt und durch einen Punkt (R) auf der Seitenwand (9), der 50% der meridionalen Profiltiefe (Cm) auf der Geraden in Strömungsrichtung hinter dem Punkt (T) der maximalen Erhebung der Grenzschichtbarriere (11) liegt, und wobei f der Abstand in Richtung der Geraden durch (F) und (R) zwischen dem Punkt (T) der maximalen Erhebung der Grenzschichtbarriere (11) und einem Hilfspunkt (E) ist, wobei der Hilfspunkt (E) im Abstand h/2 von der Geraden durch (F) und (R) auf der Zuströmflanke der Grenzschichtbarriere (11) angeordnet ist und
dass die Erhebungshöhe (h) in der Querschnittskontur der Grenzschichtbarriere (11) in mindestens einem Schnitt (K-K) entlang einer beliebigen Hilfslinie (HL) ein Maß von 0,2 · H nicht übersteigt, wobei H der Abstand zwischen einem radial inneren und einem radial äußeren Seitenwandpunkt der Hauptströmungspfadberandung an dem Schaufelprofil ist.

2. Strömungsarbeitsmaschine nach Anspruch 1, **dadurch gekennzeichnet, dass** mindestens eine Grenzschichtbarriere (11) wenigstens in einem Teilabschnitt als festkörperhaftes mit der Seitenwand (9) strukturell verbundenes Element der Schaufelreihenbaugruppe ausgebildet ist oder dass mindestens eine Grenzschichtbarriere (11) wenigstens in einem Teilabschnitt als wenigstens ein seitenwand-tangentialer Fluidstrahl ausgebildet ist.

3. Strömungsmaschine nach einem der Ansprüche 1 oder 2, **dadurch gekennzeichnet, dass** der Anfangspunkt mindestens einer Grenzschichtbarriere (11) in der Nähe des durch die Schaufelvorderkante und die Schaufelsaugseite gebildeten Profilabschnitts angeordnet ist.

4. Strömungsmaschine nach Anspruch 3, **dadurch gekennzeichnet, dass** mindestens eine Grenzschichtbarriere (11) in dem durch die die Schaufelvorderkante und die Schaufelsaugseite gebildeten Konturbereich direkt an die Schaufel angrenzt.

5. Strömungsmaschine nach einem der Ansprüche 1 bis 4, **dadurch gekennzeichnet, dass** der Startpunkt der Grenzschichtbarriere (11) stromauf der Schaufelhinterkantenebene angeordnet ist.

6. Strömungsmaschine nach Anspruch 5, **dadurch gekennzeichnet, dass** der Startpunkt der Grenzschichtbarriere (11) stromauf der zwischen Schaufelvorderkante und Schaufelhinterkante mittig angeordneten Ebene, und somit in der vorderen Hälfte der Schaufelpassage, angeordnet ist.

7. Strömungsmaschine nach Anspruch 6, **dadurch gekennzeichnet, dass** der Startpunkt der Grenzschichtbarriere im Bereich von +/-15% der meridionalen Profiltiefe Cm um die Vorderkantenebene angeordnet ist.

8. Strömungsmaschine nach einem der Ansprüche 1 bis 7, **dadurch gekennzeichnet, dass** ausgehend vom Startpunkt der Grenzschichtbarriere (11) der zwischen der Toplinie (TL) und einer Hilfslinie (HL) eingeschlossene Anstellwinkel α entlang des Verlaufes der Grenzschichtbarriere (11) stetig kleiner werdend ausgebildet ist und im Bereich 0° < α < 120° liegt.

9. Strömungsmaschine nach einem der Ansprüche 1 bis 8, **dadurch gekennzeichnet, dass** die Grenzschichtbarriere (11) hufeisenartig um die Schaufelvorderkante gelegt angeordnet ist.

10. Strömungsmaschine nach einem der Ansprüche 1 bis 9, **dadurch gekennzeichnet, dass** die Grenzschichtbarriere (11) gänzlich durch mindestens einen Fluidstrahl gebildet wird, der aus einer Öffnung in einer der Seitenwand- und Schaufeloberflächen in die Hauptströmung injiziert wird, wobei die Geometrie der Öffnung und die Ausrichtung des in die Öffnung mündenden Zufuhrkanals zur Ausbildung eines Verlaufs des austretenden Fluidstrahls tangential zur Seitenwandoberfläche ausgebildet ist.

11. Strömungsmaschine nach einem der Ansprüche 1 bis 10, **dadurch gekennzeichnet, dass** die Grenzschichtbarriere (11) durch mehrere in Reihe angeordnete Fluidquerstrahle gebildet wird und die Mittelpunkte der einzelnen Strahlaustrittsöffnungen transversal zur Hilfslinienrichtung gestaffelt vorgesehen sind, derart, dass die Mittelpunkte zweier benachbarter Austrittsöffnungen auf unterschiedlichen Hilfslinien (HL) ausgebildet sind und ein weiter stromab befindlicher Austrittsöffnungsmittelpunkt - in Richtung von einer konvexen Seite zu einer konkaven Seite einer Hilfslinie (HL) fortschreitend - versetzt zu einem weiter stromauf befindlichen Austrittsöffnungsmittelpunkt angeordnet ist

12. Strömungsmaschine nach Anspruch 10 oder 11, **dadurch gekennzeichnet, dass** der Anstellwinkel α zwischen der Hilfslinie (HL) an der Öffnung und der Strahlaustrittsrichtung zwischen 60° und 120° beträgt.

13. Strömungsmaschine nach einem der Ansprüche 1 bis 12, **dadurch gekennzeichnet, dass** die Grenzschichtbarriere (11) wenigstens teilweise durch mindestens einen Fluidstrahl gebildet wird und der Querschnitt mindestens einer Öffnung, aus der ein Fluidstrahl austritt, so geformt ist, dass der Strahl in seinem in unmittelbarer Nähe der Seitenwandkontur injizierten Teil wenig Fluid führt, bedingt durch einen dort örtlich kleinen Öffnungsquerschnitt, und in seinem weiter von der Seitenwandkontur entfernt injizierten Teil mehr Fluid führt, bedingt durch einen dort örtlich großen Öffnungsquerschnitt, sodass die Fluidmasse innerhalb des Strahls mit dem Abstand zur Seitenwand zunimmt oder dass der Strahl in seinem in unmittelbarer Nähe der Seitenwandkontur injizierten Teil viel Fluid führt, bedingt durch einen dort örtlich großen Öffnungsquerschnitt, und in seinem weiter von der Seitenwandkontur entfernt injizierten Teil weniger Fluid führt, bedingt durch einen dort örtlich kleinen Öffnungsquerschnitt, sodass die Fluidmasse innerhalb des Strahls mit dem Abstand zur Seitenwand abnimmt.

## Claims

1. Fluid-flow machine with a main flow path in which at least one row of blades (2) is arranged, with at least one blade end of a blade row (2) being firmly connected to the main flow path confinement and, in the area of this fixed blade end at a sidewall (9), at least one longish, obstacle-type boundary layer barrier (11) being provided, with the boundary layer barrier (11) in at least part of its course being oriented obliquely to the main flow, and designed for deflecting fluid flowing near the sidewall in the direction of the blade pressure side, where:
a.) a skeleton line is allocated to each blade profile section on the sidewall (9) of the fixed blade end provided with the at least one boundary layer barrier (11), said skeleton line being defined within the profile by the center line between the pressure and the suction side and outside of the profile by the respective tangential prolongation of this center line on the leading and trailing edges,
b.) a family of auxiliary lines (HL) is formed in the area between the skeleton lines of two adjacent sidewall profile sections along the sidewall (9), with each auxiliary line (HL) being generated by merely shifting the sidewall profile skeleton line in the circumferential direction u, and with the course of an auxiliary line (HL) at any point in the area of said fixed blade end characterizing the course of the main flow,
c.) the at least one boundary layer barrier (11) has a starting point from which it extends with a direction component which is transverse relative to the auxiliary lines (HL), so that the boundary layer barrier (11) intersects the family of auxiliary lines (HL) in such a manner that, commencing at the starting point, the course of the boundary layer barrier (11) continuously departs from the convex side of an auxiliary line (HL) and approaches the concave side of an adjacent auxiliary line (HL), and
d.) the course of each boundary layer barrier (11) is defined by means of its top line (TL), which is formed by a connecting line of the points of maximum elevation of the boundary layer barrier (11), **characterized in that** the cross-sectional contour of the boundary layer barrier (11) on the flow-facing side ascends at a steep angle from the sidewall (9) with the boundary layer barrier (11), in at least one section (K-K) along any auxiliary line (HL) and perpendicular to the plane established by the meridional direction (m) and the circumferential direction (u) and based on an auxiliary line (HL), with the steepness of the angle amounting to (h/f) > 1, where h is the elevation height of the boundary layer barrier (11), defined as the distance between a point (T) of the maximum elevation of the boundary layer barrier (11) and a straight line running through a point (F) on the sidewall (9), which is located at 20 % of the meridional profile depth (Cm) of the blade profile on the straight line in the flow direction in front of the point (T) of the maximum elevation of the boundary layer barrier (11), and through a point (R) on the sidewall (9), which is located at 50 % of the meridional profile depth (Cm) on the straight line in the flow direction behind the point (T) of the maximum elevation of the boundary layer barrier (11), and where f is the distance in the direction of the straight line running through (F) and (R) between the point (T) of the maximum elevation of the boundary layer barrier (11) and an auxiliary point (E), with the auxiliary point (E) being arranged on the inflow flank of the boundary layer barrier (11) at the distance h/2 from the straight line running through (F) and (R), and
that the elevation height (h) in the cross-sectional contour of the boundary layer barrier (11) does not exceed a dimension of 0.2 · H in at least one section (K-K) along any auxiliary line (HL), with H being the distance between a radially inner and a radially outer sidewall point of the main flow path boundary on the blade profile.

2. Fluid-flow machine in accordance with Claim 1, **characterized in that** at least one boundary layer barrier (11) is designed in at least one partial section as solid body-type element of the blade row assembly which is structurally connected to the sidewall (9), or that at least one boundary layer barrier (11) is designed in at least one partial section as at least one fluid jet which extends tangential to the sidewall.

3. Fluid-flow machine in accordance with one of the Claims 1 or 2, **characterized in that** the starting point of at least one boundary layer barrier (11) is provided near the profile section formed by the blade leading edge and the blade suction side.

4. Fluid-flow machine in accordance with Claim 3, **characterized in that** at least one boundary layer barrier (11) directly adjoins the blade in the contour area formed by the blade leading edge and the blade suction side.

5. Fluid-flow machine in accordance with one of the Claims 1 to 4, **characterized in that** the starting point of the boundary layer barrier (11) is provided upstream of the trailing edge plane of the blade.

6. Fluid-flow machine in accordance with Claim 5, **characterized in that** the starting point of the boundary layer barrier (11) is provided upstream of the plane located centrally between the blade leading edge and the blade trailing edge and, thus, in the forward half of the blade passage.

7. Fluid-flow machine in accordance with Claim 6, **characterized in that** the starting point of the boundary layer barrier is provided in the area of
+/- 15 % of the meridional profile depth Cm around the leading edge plane.

8. Fluid-flow machine in accordance with one of the Claims 1 to 7, **characterized in that**, commencing at the starting point of the boundary layer barrier (11), the inclination angle α included between the top line (TL) and an auxiliary line (HL) is designed such that it continuously decreases along the course of the boundary layer barrier (11) and lies in the range 0°< α < 120°.

9. Fluid-flow machine in accordance with one of the Claims 1 to 8, **characterized in that** the boundary layer barrier (11) winds around the blade leading edge like a horseshoe.

10. Fluid-flow machine in accordance with one of the Claims 1 to 9, **characterized in that** the boundary layer barrier (11) is entirely formed by at least one fluid jet injected into the main flow from a port in one of the sidewall and blade surfaces, where the geometry of the port and the orientation of the supply duct issuing into the port are designed for providing a course of the issuing fluid jet tangential to the sidewall surface.

11. Fluid-flow machine in accordance with one of the Claims 1 to 10, **characterized in that** the boundary layer barrier (11) is formed by several fluid transverse jets arranged in series, and the centers of the individual jet exit ports are staggered transversely to the auxiliary line direction in such a manner that the centers of two adjacent exit ports are provided on different auxiliary lines (HL) and a further downstream exit port center - propagating in a direction from a convex side to a concave side of an auxiliary line (HL) - is arranged offset relative to a further upstream exit port center.

12. Fluid-flow machine in accordance with Claim 10 or 11, **characterized in that** the inclination angle α between the auxiliary line (HL) at the port and the jet exit direction ranges between 60° and 120°.

13. Fluid-flow machine in accordance with one of the Claims 1 to 12, **characterized in that** the boundary layer barrier (11) is at least partly formed by at least one fluid jet, and the cross section of at least one port, from which issues a fluid jet, is formed such that the jet carries little fluid in its part injected in immediate vicinity of the sidewall contour as a result of a locally small port cross-section there, and more fluid in its part injected further remote from the sidewall contour, as a result of a locally large port cross-section there, so that the fluid mass within the jet increases with the distance from the sidewall, or that the jet carries much fluid in its part injected in immediate vicinity of the sidewall contour as a result of a locally large port cross-section there, and less fluid in its part injected further remote from the sidewall contour, as a result of a locally small port cross-section there, so that the fluid mass within the jet decreases with the distance from the sidewall.

## Revendications

1. Machine à écoulement avec une voie d'écoulement principale, dans laquelle est disposée au moins une rangée d'aubes (2), où au moins une extrémité d'aube d'une rangée d'aubes (2) présente une liaison fixe avec le bord de la voie d'écoulement principale et dans la zone de cette extrémité d'aube fixe sur une paroi latérale (9) est prévue au moins une barrière de couche limite (11) oblongue faisant obstacle, la barrière de couche limite (11) étant disposée obliquement par rapport à l'écoulement principal au moins sur une partie de son étendue et conçue pour dévier en direction de l'intrados de l'aube le fluide s'écoulant à proximité de la paroi latérale, sachant :
a.) qu'à chaque section de profil d'aube sur la paroi latérale (9) de l'extrémité d'aube fixe munie de l'au moins une barrière de couche limite (11) est associée une ligne médiane, laquelle est définie à l'intérieur du profil par la ligne moyenne entre l'intrados et l'extrados, et à l'extérieur du profil par chaque prolongement tangentiel de cette ligne moyenne sur les bords d'attaque et de fuite,
b.) que dans la zone entre les lignes médianes de deux sections de profil de paroi latérale voisines est formée une famille de lignes auxiliaires (HL) le long de la paroi latérale (9), que chaque ligne auxiliaire (HL) est créée par une pure translation de la ligne médiane de profil de paroi latérale dans le sens circonférentiel u, et que l'allure d'une ligne auxiliaire (HL) à n'importe quel point dans la zone de ladite extrémité d'aube fixe caractérise l'allure de l'écoulement principal,
c.) que l'au moins une barrière de couche limite (11) présente un point initial à partir duquel elle s'étend avec une composante directionnelle transversale par rapport aux lignes auxiliaires (HL), de sorte que la barrière de couche limite (11) croise la famille de lignes auxiliaires (HL) de manière telle qu'en partant du point de départ, l'allure de la barrière de couche limite (11) s'éloigne constamment du côté convexe d'une ligne auxiliaire (HL) et se rapproche du côté concave d'une ligne auxiliaire (HL) voisine, et
d.) que l'allure de chaque barrière de couche limite (11) est déterminée au moyen de sa ligne de crête (TL) formée par une ligne reliant les points d'élévation maximale de la barrière de couche limite (11),
**caractérisée en ce que** le contour de la section transversale de la barrière de couche limite (11) s'élève de la paroi latérale (9) avec la barrière de couche limite (11) selon une pente raide sur le côté tourné vers l'écoulement dans au moins une coupe (K-K) le long d'une quelconque ligne auxiliaire (HL) et perpendiculairement au plan formé par le sens méridien (m) et le sens circonférentiel (u) et reposant sur une ligne auxiliaire (HL),
sachant que la raideur de la pente a la valeur (h/f) > 1, où h est la hauteur d'élévation de la barrière de couche limite (11), définie en tant que distance entre un point (T) de l'élévation maximale de la barrière de couche limite (11) et une droite passant par un point (F) sur la paroi latérale (9), ce point (F) étant situé sur la droite dans le sens d'écoulement en amont du point (T) de l'élévation maximale de la barrière de couche limite (11) à une distance égale à 20 % de la profondeur de profil méridienne (Cm) du profil d'aube, et passant par un point (R) sur la paroi latérale (9), ce point (R) étant situé sur la droite dans le sens d'écoulement en aval du point (T) de l'élévation maximale de la barrière de couche limite (11) à une distance égale à 50 % de la profondeur de profil méridienne (Cm), et
où f est la distance dans la direction de la droite passant par (F) et (R) entre le point (T) de l'élévation maximale de la barrière de couche limite (11) et un point auxiliaire (E) situé à une distance h/2 de la droite passant par (F) et (R) sur le flanc d'afflux de la barrière de couche limite (11), et
que la hauteur d'élévation (h) dans le contour de la section transversale de la barrière de couche limite (11), dans au moins une section (K-K) le long d'une quelconque ligne auxiliaire (HL), n'excède pas une valeur de 0,2 · H, où H est la distance entre un point intérieur dans le sens radial et un point extérieur dans le sens radial de la paroi latérale du bord de la voie d'écoulement principale sur le profil d'aube.

2. Machine à écoulement selon la revendication n° 1, **caractérisée en ce qu'**au moins une barrière de couche limite (11) est conçue, au moins dans une section partielle, à la manière d'un corps solide en tant qu'élément du sous-ensemble de rangées d'aubes, qui est relié structurellement à la paroi latérale (9), ou qu'au moins une barrière de couche limite (11) est conçue, au moins dans une section partielle, en tant qu'au moins un filet de fluide tangentiel à la paroi latérale.

3. Machine à écoulement selon une des revendications n° 1 ou n° 2, **caractérisée en ce que** le point initial d'au moins une barrière de couche limite (11) est situé à proximité de la section de profil formée par le bord d'attaque de l'aube et l'extrados de l'aube.

4. Machine à écoulement selon la revendication n° 3, **caractérisée en ce qu'**au moins une barrière de couche limite (11) jouxte directement l'aube dans la zone de contour formée par le bord d'attaque de l'aube et l'extrados de l'aube.

5. Machine à écoulement selon une des revendications n° 1 à n° 4, **caractérisée en ce que** le point de départ de la barrière de couche limite (11) est situé en amont du plan du bord de fuite de l'aube.

6. Machine à écoulement selon la revendication n° 5, **caractérisée en ce que** le point de départ de la barrière de couche limite (11) est situé en amont du plan médian entre le bord d'attaque de l'aube et le bord de fuite de l'aube, et par conséquent dans la moitié antérieure du passage d'aubes.

7. Machine à écoulement selon la revendication n° 6, **caractérisée en ce que** le point de départ de la barrière de couche limite est situé dans la plage de +/- 15 % de la profondeur de profil méridienne Cm autour du plan du bord d'attaque.

8. Machine à écoulement selon une des revendications n° 1 à n° 7, **caractérisée en ce qu'**en partant du point de départ de la barrière de couche limite (11), l'angle d'inclinaison a inscrit entre la ligne de crête (TL) et une ligne auxiliaire (HL) est formé de manière à diminuer constamment le long de l'étendue de la barrière de couche limite (11) et se situe dans la plage 0° < α < 120°.

9. Machine à écoulement selon une des revendications n° 1 à n° 8, **caractérisée en ce que** la barrière de couche limite (11) est placée autour du bord d'attaque de l'aube à la manière d'un fer à cheval.

10. Machine à écoulement selon une des revendications n° 1 à n° 9, **caractérisée en ce que** la barrière de couche limite (11) est formée intégralement par au moins un filet de fluide, qui est injecté dans l'écoulement principal à partir d'un orifice dans une des surfaces de la paroi latérale et de l'aube, sachant que la géométrie de l'orifice et l'orientation du canal d'alimentation débouchant dans l'orifice sont conçues pour former un écoulement tangentiel à la surface de la paroi latérale du filet de fluide émergent.

11. Machine à écoulement selon une des revendications n° 1 à n° 10, **caractérisée en ce que** la barrière de couche limite (11) est formée par plusieurs filets transversaux de fluide disposés en série, et que les centres des différents orifices de sortie de filets sont prévues échelonnés transversalement à la direction des lignes auxiliaires, de manière telle que les centres de deux orifices de sortie voisins sont formés sur des lignes auxiliaires (HL) distinctes, et qu'un centre d'orifice de sortie se trouvant plus loin en aval - suivant une propagation en direction d'un côté convexe vers un côté concave d'une ligne auxiliaire (HL) - est situé en décalage par rapport à un autre centre d'orifice de sortie se trouvant plus en amont.

12. Machine à écoulement selon la revendication n° 10 ou n° 11, **caractérisée en ce que** l'angle d'inclinaison α entre la ligne auxiliaire (HL) à l'orifice et la direction de sortie des filets a une valeur comprise entre 60° et 120°.

13. Machine à écoulement selon une des revendications n° 1 à n° 12, **caractérisée en ce que** la barrière de couche limite (11) est formée au moins partiellement par au moins un filet de fluide et que la section transversale d'au moins un orifice, duquel sort un filet de fluide, est formée de manière telle que le filet, dans sa partie injectée à proximité immédiate du contour de la paroi latérale transporte peu de fluide en raison d'une section transversale d'orifice localement petite à cet endroit, et dans sa partie injectée plus éloignée du contour de la paroi latérale transporte davantage de fluide en raison d'une section transversale d'orifice localement grande à cet endroit, de sorte que la masse de fluide à l'intérieur du filet augmente avec la distance à la paroi latérale, ou que le filet, dans sa partie injectée à proximité immédiate du contour de la paroi latérale transporte beaucoup de fluide en raison d'une section transversale d'orifice localement grande à cet endroit, et dans sa partie injectée plus éloignée du contour de la paroi latérale transporte moins de fluide en raison d'une section transversale d'orifice localement petite à cet endroit, de sorte que la masse de fluide à l'intérieur du filet diminue avec la distance à la paroi latérale.
